# EUROPÄISCHE PATENTSCHRIFT

(11) **EP 1 819 522 B1**
(45) Veröffentlichungstag und Bekanntmachung des Hinweises auf die Patenterteilung: **08.09.2010**
(21) Anmeldenummer: 05801727.8
(22) Anmeldetag: 14.10.2005
(51) Int. Cl.: B41M 5/26, C08K 3/00

(54) **VERWENDUNG VON ZINNPHOSPHATEN IN LASERBESCHRIFTBAREN THERMOPLASTISCHEN KUNSTOFFEN**
USE OF TIN PHOSPHATES IN THERMOPLASTIC MATERIALS THAT CAN BE LASER-INSCRIBED
UTILISATION DE PHOSPHATES D'ETAIN DANS DES MATIERES THERMOPLASTIQUES POUVANT ETRE MARQUEES PAR LASER

(30) Priorität: 15.10.2004 DE 102004050481
(43) Veröffentlichungstag der Anmeldung: 22.08.2007
(73) Patentinhaber: Chemische Fabrik Budenheim KG, 55257 Budenheim (DE)
(72) Erfinder: MARKMANN, Joachim, 55452 Dorsheim (DE); WISSEMBORSKI, Rüdiger, 55435 Gau-Algesheim (DE)
(74) Vertreter: WSL Patentanwälte
(86) Internationale Anmeldenummer: PCT/EP2005/055283
(87) Internationale Veröffentlichungsnummer: WO 2006/042831

(56) Entgegenhaltungen:
- WO-A-2004/050766
- DE-A1- 10 252 007
- DE-A1- 19 905 358
- US-A- 5 063 137
- US-B1- 6 214 916
- DATABASE WPI Section Ch, Week 198942 Derwent Publications Ltd., London, GB; Class A18, AN 1989-303736 XP002070297 -& JP 01 222994 A (DAINIPPON INK & CHEM KK) 6. September 1989 (1989-09-06)

## Beschreibung

Die Erfindung betrifft die Beschreibbarkeit oder Markierbarkeit von Kunststoffgegenständen mit Laserlicht.

Die Markierung und Beschriftung von Kunststoffgegenständen ist seit langem bekannt, und man weiß auch schon viele Jahre, daß die meisten Kunststoffe Laserlicht nicht absorbieren und daher nicht als solche beschriftet werden können. Aus diesem Grund werden den Kunststoffen feinteilige Pigmente zugesetzt, die das Laserlicht absorbieren und unter dem Einfluß des Laserlichts ihre Farbe verändern. Dabei wird der Begriff der Farbveränderung unabhängig von dem Mechanismus gesehen. Außerdem beinhaltet hier der Begriff "Farbveränderung", daß eine andere Farbe als ursprünglich entsteht oder daß die gleiche oder eine ähnliche Farbe, jedoch mit anderem Helligkeitsgrad, gebildet wird. Farbveränderung kann hier auch bedeuten, daß eine Lösung zunächst farblos war und durch das Laserlicht eine bestimmte Farbe bekam oder daß im Kunststoff eine Farbveränderung auftritt.

Das beherrschende Problem dabei besteht darin, daß eine gut lesbare Laserbeschriftung einen starken Farbkontrast zwischen den beiden Zuständen vor Bestrahlung mit Laserlicht einerseits und nach dieser Bestrahlung andererseits erfordert, nachdem ähnliche Farbtöne in beiden Zuständen erhebliche Probleme beim Lesen der beschrifteten Kunststoffmaterialien mit sich bringen.

Es ist auch bereits bekannt, für diesen Zweck Metallsalze zu benutzen, wie beispielsweise Kupferhydroxidphosphat, doch befriedigt diese Verbindung die Forderungen der Industrie noch immer nicht, weswegen nach wie vor Verbindungen gesucht werden, die durch Verstärkung des Farbkontrastes der Zustände bestimmter oder praktisch aller Kunststoffe vor und nach der Laserlichtbestrahlung das Lesen erleichtern.

Überraschenderweise wurde nun gefunden, daß diese Aufgabe durch Verwendung von Trizinnphosphat oder Zinnpyrophosphat, als Pigment für thermoplastische Kunststoffe gelöst wird, indem deren Laserbeschriftbarkeit sprunghaft verbessert wird. Selbstverständlich können den Phosphaten auch übliche Additive zur Verbesserung bestimmter Eigenschaften zugesetzt werden oder als Verunreinigungen aus der Herstellung enthalten sein.

Das Pigment zur Erzielung und Verbesserung der Laserbeschriftbarkeit muß in dem beschriftbar zu machenden Kunststoffgegenstand insgesamt oder in bestimmten Bereichen, wie den Oberflächenbereichen, möglichst gleichmäßig verteilt sein. Hierzu sollte das Pigment teilchenförmig und feinteilig sein und eine mittlere Teilchengröße (d₅₀) unter 20 µm, vorzugsweise unter 5 µm haben. Die mittlere Kornfeinheit hat einen wesentlichen Einfluß auf die Eigenschaften und damit auf die Einsetzbarkeit als Pigment zur Laserbeschriftbarkeit.

Die Zinnverbindungen, insbesondere Trizinnphosphat, haben ein sehr hohes Schüttgewicht. Die niedrige mittlere Kornfeinheit hat einen wesentlichen Einfluß auf die Laserbeschriftbarkeit. Eine höhere Kornfeinheit führt zur Heraufsetzung der benötigten Energie, eine zu niedrige Kornfeinheit führt zu einem unerwünschten Aufschäumen in den oberen Bereichen des Kunststoffes.

Der als L-Wert bezeichnete Helligkeitswert liegt zwischen 92 und 110, so daß dieses Material als nahezu weiß bezeichnet werden kann, was wesentliche Vorteile beim Einarbeiten in helle Kunststoffe bringt. Das beschriebene Produkt läßt sich sehr schnell auf einen tiefen Wassergehalt herabtrocknen. Mit der Wasserbestimmungsmethode nach Karl Fischer werden Restfeuchten unter 0,5 Gew.-% ermittelt.

Das Trizinnphosphat nach der Erfindung hat eine mittlere Kornfeinheit (d₅₀) von 8 bis 20 µm (d₅₀), vorzugsweise unter 10 µm, vorzugsweise unter 5 µm, insbesondere unter 1 µm, Helligkeitswerte (L-Wert) von 92 bis 110 und Restfeuchten unter 1 Gew.-%, vorzugsweise bei 1 bis 5 µm, besonders über 0,1 µm. Bevorzugt liegen die Kornfeinheiten unter 10 µm (d₅₀), die L-Werte liegen bevorzugt im Bereich von 94 bis 98, und die Restfeuchten liegen bevorzugt unter 0,5 Gew.-%. Der Farbkontrast zwischen nicht mit Laserlicht bestrahltem Zustand und mit Laserlicht bestrahltem Zustand ist erheblich.

Die Herstellung der Zinnphosphate ist aus "Gmelin, Handbuch der Anorganischen Chemie: Zinn, Teil C, 2. - 8. Auflage - Springer-Verlag, Berlin, 1975, S. 245-259, bekannt.

Das Trizinnphosphat wird in die Kunststoffmatrix in einer Menge von 0,1 bis 1,0 Gew.-%, vorzugsweise um 0,5 Gew.-% herum eingebracht. Zusätzlich zu diesem Zinnorthophosphat können andere Pigmente eingelagert werden, wie beispielsweise Kupferphosphat oder andere Stoffe zur Erzielung spezieller Eigenschaften.

### Beispiele

### Beispiel 1

Das nach dem folgenden Absatz hergestellte Zinnorthophosphat wird erfindungsgemäß in eine Polyamid-Matrix in einer Menge von 0,5 Gew.-% eingearbeitet, die Formmasse wird zu einer Spritzgußplatte verarbeitet und mittels Nd-YAG-Laser dann bei einer Wellenlänge von 1046 nm mit einer Markierung versehen, die einen K-Wert über 4 aufweist. Das dabei verwendete Zinnorthophosphat wird folgendermaßen hergestellt:

Ein Trinatriumorthophosphat wird in Wasser gelöst und bei Raumtemperatur mit einem aliquoten Anteil Zinnchlorid umgesetzt. Es werden 30 min Nachreaktion abgewartet. Dann wird abgesaugt und der entstandene Niederschlag von tertiärem Zinnphosphat mit Wasser bis zur Chloridfreiheit gewaschen. Anschließend wird über P₂O₅ schonend getrocknet und vermahlen.

Alternativ wird das dabei verwendete tertiäre Zinnphosphat wie folgt hergestellt:

Zinnsulfat wird in Wasser gelöst und mit einem aliquoten Anteil Phosphorsäure versetzt, damit tertiäres Zinnphosphat entsteht. Dann wird mit Natronlauge ein pH-Wert von 9 eingestellt, das entstandene Trizinnphosphat wird separiert und gewaschen. Anschließend wird über P₂O₅ schonend getrocknet und vermahlen.

### Beispiel 2

Der Zusatz von 0,5 Gew.-% Zinnphosphat in eine Polyamid-Matrix und zusätzliche Zugabe eines Eisenphosphits in einer Menge von 0,5 Gew.-% sowie anschließende Verarbeitung des Kunststoffes zu Platten und Beschriftung mit einem Nd-YAG-Laser einer Wellenlänge von 1064 oder 532 nm ergibt eine Beschriftung mit einem K-Wert von mehr als 3,5.

## Patentansprüche

1. Verwendung von Trizinnphosphat oder Zinnpyrophosphat mit einer Restfeuchte von maximal 1 Gew.-% und einer Helligkeit entsprechend einem L-Wert von 92 bis 110 als Pigment für thermoplastische Kunststoffe zur Verbesserung von deren Laserbeschriftbarkeit/-markierbarkeit.

2. Verwendung nach Anspruch 1 mit einer mittleren Kornfeinheit unter 20 µm, vorzugsweise unter 10 µm, besonders bevorzugt unter 5 µm.

## Claims

1. Use of tri-tin phosphate or tin pyrophosphate with a residual moisture content of a maximum 1 % by weight and a lightness according to an L-value of 92 to 110 as pigment for thermoplastic materials for improving the laser writability/markability thereof.

2. Use as set forth in claim 1 with a mean grain fineness of below 20 µm, preferably below 10 µm, particularly preferably below 5 µm.

## Revendications

1. Utilisation de triphosphate d'étain ou de pyrophosphate d'étain présentant une humidité résiduelle de 1% en poids maximum et une luminosité correspondant à une valeur L de 92 à 110 comme pigment pour matières thermoplastiques afin d'améliorer l'aptitude au marquage ou à l'inscription laser de celles-ci.

2. Utilisation selon la revendication 1 avec une finesse granulométrique moyenne inférieure à 20 µm, de préférence inférieure à 10 µm, de façon particulièrement préférée inférieure à 5 µm.
